Europäisches Patentamt

European Patent Office

Office européen des brevets

(19)

(11) Veröffentlichungsnummer : **0 470 982 B1**

# (12) EUROPÄISCHE PATENTSCHRIFT

(45) Veröffentlichungstag der Patentschrift :
**14.07.93 Patentblatt 93/28**

(51) Int. Cl.$^5$ : **G01N 21/64,** G01N 21/55

(21) Anmeldenummer : **90906934.6**

(22) Anmeldetag : **28.04.90**

(86) Internationale Anmeldenummer :
**PCT/EP90/00688**

(87) Internationale Veröffentlichungsnummer :
**WO 90/13808 15.11.90 Gazette 90/26**

(54) **REFLEXIONSFLUORIMETER.**

(30) Priorität : **01.05.89 CH 1621/89**
**29.12.89 DE 3943252**
**20.02.90 DE 4005245**

(43) Veröffentlichungstag der Anmeldung :
**19.02.92 Patentblatt 92/08**

(45) Bekanntmachung des Hinweises auf die
Patenterteilung :
**14.07.93 Patentblatt 93/28**

(84) Benannte Vertragsstaaten :
**DE FR GB**

(56) Entgegenhaltungen :
**APPLIED OPTICS, Band 27, Nr. 7, 1. April 1988,
New York, NY, US; J.F. GIULIANI et al.:
"Computer modeling for optical waveguide
sensors", Seiten 1353-1357
TALANTA, Band 35, Nr. 2, 1988, Pergamon
Journals Ltd, GB; R. D. PETREA et al.:
"Fiber-optic time-resolved fluorimetry for immunoassays", Seiten 139-144**

(73) Patentinhaber : **BOHNENKAMP, Wolfram
Thingoltstrasse 24
W-7750 Konstanz (DE)**

(72) Erfinder : **BOHNENKAMP, Wolfram
Thingoltstrasse 24
W-7750 Konstanz (DE)**

(74) Vertreter : **Münich, Wilhelm, Dr.
Kanzlei Münich, Steinmann, Schiller
Wilhelm-Mayr-Str. 11
W-8000 München 21 (DE)**

EP 0 470 982 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Technisches Gebiet

Die vorliegende Erfindung bezieht sich auf ein Reflexionsfluorimeter mit einem zylindrischen Meßlichtleiter.

Trifft eine Lichtwelle unter einem bestimmten Winkel auf die Grenzfläche zweier Medien mit verschiedenen Brechungsindices, so kann sie total reflektiert werden, sofern der Einfallswinkel $\theta$ größer ist als der kritische Winkel $\theta_c$. Dieser Winkel errechnet sich aus der Gleichung

$$\theta_c = \text{Sinus}^{-1} (n2/n1)$$

wobei n1 und n2 die Brechungsindices der verschiedenen Medien sind und n2 < n1 ist. An dem Ort der Reflexion wird in dem optisch dünneren Medium eine Welle generiert, die dicht an der Grenzfläche ein Energiefeld aufbaut. Die Benutzung dieses Energiefeldes (evanescent wave) für optische Analysen ist schon lange bekannt: die Absorptionseffekte bei totaler Reflexion an der Grenzfläche zweier optischer Medien sind sogar die klassische Methode für den Nachweis dieser Energiefelder (C. Schaefer, Zeitschrift für Physik, 75 [1932] 687-694).

Die Benutzung dieses Energiefeldes für analytische Messungen hat einige Vorteile gegenüber konventioneller Anregung. Es kann eine stärkere Energiekopplung innerhalb des dünnen Films auftreten, was in der Regel zu einer Verringerung des Hintergrundsignals und damit zu einem besseren Signal/ Rauschverhältnis führt.

Stand der Technik

Einrichtungen zur Messung von Fluoreszenz, die durch Totalreflexion angeregt wird, benutzen Fasern, Küvetten oder Kapillaren (EP-A 0202021, EP-A 0205236, EP-A 0245206, EP-A 0209489, EP-A 0239382, EP-A 0075353, DE-A 3605518, US-A 4654532 und US-A 4716121). In der DE-A 3605518 wird ein rohrförmiger Meßlichtleiter für ein Reflexionsfluorimeter beschrieben. Die Enden des Meßlichtleiters sind zur Vergrößerung des Eintrittquerschnitts für das anregende Licht als sphärische oder konische Fenster ausgebildet. Zur Beobachtung von Fluoreszenzstrahlung ist vorgesehen, das im wesentlichen senkrecht zur Achse des Meßlichtleiters austretende Licht zu untersuchen. Hierzu wird beispielsweise die Achse des Meßlichtleiters auf den Eintrittsspalt des Fluoreszenzspektrometers abgebildet.

Aus E. Reichstein et al., Anal. Chem. 60 [1988] 1069-1074, ist bekannt, die mit gepulstem Laserlicht angeregte Fluoreszenz von in den Vertiefungen einer Mikrotiterplatte fixierten, fluoreszenzmarkierten Antikörpern in einem auf die relativ lange Abklingdauer der Fluoreszenz des Markers und die rasch abklingenden Hintergrundfluoreszenz der Probelösung abgestimmten Zeitfenster zu messen.

Beschreibung der Erfindung

Aufgabe der vorliegenden Erfindung ist es, die Reflexionsfluorimeter mit zylindrischem Meßlichtleiter nach dem Stand der Technik hinsichtlich Empfindlichkeit, Signal/Rauschverhältnis, erforderlichem Probenvolumen und erhältlicher Quantität und Qualität an Information zu verbessern. Erfindungsgemäß gelöst wird diese Aufgabe durch die in den Patentansprüchen definierten Gegenstände.

Gegenstand der Erfindung ist ein Reflexionsfluorimeter mit einem zylindrischen Meßlichtleiter gekennzeichnet durch einen kapillarförmigen Meßlichtleiter, eine kegelmantelförmige Einstrahlung gepulsten Lichtes auf eine Stirnseite des Meßlichtleiters, und eine Vorrichtung zur zeitaufgelösten Messung des im wesentlichen radial aus dem Meßlichtleiter austretenden Emissionslichtes.

Ein bevorzugter Reflexionsfluorimeter zeichnet sich durch eine Vorrichtung zur wellenlängenaufgelösten Messung aus.

Weiterhin bevorzugt ist ein Reflexionsfluorimeter, bei dem der Meßlichtleiter an dem der Lichteinstrahlung gegenüberliegenden Ende eine Verspiegelung aufweist.

Ein besonders bevorzugtes Reflexionsfluorimeter weist einen Hilfssensor zur Messung eines Teiles des reflektierten Lichtes und/oder des Emissionslichtes zur Kompensation und Korrektur der Meßwerte auf.

Eine weitere Ausführungsform zeichnet sich dadurch aus, daß der Meßlichtleiter sich auf einer Brennlinie eines Reflektors befindet, der einen elliptischen und/oder paraboloiden Querschnitt hat. Vorzugsweise schließt sich an den Reflektor ein Fokus-Adpater an.

Zur Einführung des Lichtes in den optischen Lichtleiter wird erfindungsgemäß vorzugsweise eine Optik benutzt, die eine kegelmantelförmige Lichteinstrahlung herstellt. Unter kegelmantelförmiger Lichteinstrahlung soll eine Lichtführung verstanden werden, die durch 2 konzentrische Kegeloberflächen mit gemeinsamer Spitze als Brennpunkt begrenzt wird. Der Einfallswinkelbereich $\theta_{i\ min}$ - $\theta_{i\ max}$ wird in Abhängigkeit von dem Brechungsindex des verwendeten Lichtleiters ausgewählt. Der Winkelbereich sollte möglichst groß sein, damit die Totalreflexionen möglichst gleichmäßig über die Grenzflächen des Lichtleiters verteilt sind. Der größte gewählte Öffnungswinkel des Lichtkegelmantels $\theta_{i\ max}$ sollte möglichst groß sein, damit möglichst viele Totalreflexionen über die Länge des Lichtleiters erreicht werden. Er darf jedoch nur so groß sein, daß die Reflexionswinkel im Inneren des Lichtleiters noch über dem kritischen Winkel $\theta_c$ liegen. Hierdurch verkleinert sich das Verhältnis zwischen eingestrahlter Lichtmenge und Anzahl von Totalreflexionen im Meßlichtleiter, was ein verbessertes Signal/Rauschverhältnis zur Folge hat.

Eine ähnliche Strahlenführung kann man durch mehrere konventionelle Lichtleiter erreichen, die entsprechend in eine kegelförmige Halterung montiert sind.

Die kegelmantelförmige Lichteinstrahlung kann aber auch durch eine rotationssymmetrische Spiegelanordnung erreicht werden. Der Vorteil einer solchen Einrichtung ist die höhere Lichtausbeute der anregenden Lichtquelle.

Als Lichtquellen kommen die für diese Zwecke üblichen Laser in Frage. Die Anregung der Fluoreszenz erfolgt durch die gepulste Einstrahlung des Anregungslichtes. Die Länge der eingestrahlten Lichtpulse kann in weiten Grenzen variiert werden. Zweckmäßig ist ein Bereich der Pulslänge von 0,1-10 ns (Nanosekunden). Die Pulsfrequenz beträgt 0,1 Hz - 1 GHz. Werden nun sowohl zeit- als auch wellenlängenabhängige Messungen durchgeführt, so ist es möglich mehrere Analyte in einer Meßeinrichtung nahezu gleichzeitig zu detektieren. Es können auch sogenannte innere Standards zur Meßwertkompensation und -korrektur eingebracht werden. Es können dadurch Justiermängel der Kapillare oder Schwankungen der Laserleistung etc. erkannt werden. Es wird hiermit möglich, Leistung und Zuverlässigkeit der Meßeinrichtung bzw. jeder einzelnen Messung zu dokumentieren. Zusammen mit einer datei- bzw. rechnergestützten Verarbeitung können so diagnostische Aussagen erstellt werden.

Durch Verspiegelung des Meßlichtleiters an dem der Lichteinstrahlung gegenüberliegenden Ende kann der Lichtweg verdoppelt werden, womit eine bessere Lichtnutzung erreicht werden kann. Dem Fachmann sind die Verfahren zur Verspiegelung bekannt.

Ein kleiner Teil des austretenden Anregungslichtes kann gewünschtenfalls für Absorptions- oder Kontroll- und Korrekturmessungen genutzt werden, um Fehler z.B. durch schwankende Intensität des Anregungslichtes, Inhomogenitäten des Lichtleiters oder ungenügende Justierung rechnerisch oder mechanisch zu kompensieren. Hierzu wird ein Teil des an der Stirnfläche austretenden Lichts auf einen Hilfssensor oder den Meßsensor gelenkt.

Es werden kapilläre Lichtleiter eingesetzt, da hier das Verhältnis von Volumen zu innerer Oberfläche günstig ist. Für Untersuchungen mit sehr verdünnten Lösungen ist es sinnvoll das Verhältnis von innerer Oberfläche zum Probenvolumen möglichst groß zu holten. Das erhöht die Empfindlichkeit der Messung und verkürzt die Reaktionszeiten für Adsorbtionsvorgänge oder Bindungsreaktionen, die an der inneren Oberfläche stattfinden können.

Beispielsweise hat eine Kapillare mit einer Länge von 100 mm und einem inneren Durchmesser von 0.56 mm, ein Volumen von 25 µl und eine innere Oberfläche von 1.77 cm². Im Vergleich dazu hot eine Vertiefung in einer Mikrotiterplatte ein Volumen von ca. 220 µl und eine Fläche von 1.65 cm².

Um den Eintrittsquerschnitt zu erhöhen, kann die Stirnfläche des Meßlichtleiters auf der Seite des Lichteintritts konisch zulaufend gestaltet sein.

Gewünschtenfalls kann die innere Oberfläche aktiviert werden, beispielsweise durch Fixierung von für die zu untersuchenden Analyte spezifischen Antikörpern. Die Fixierung der für die Bestimmung der Analyte notwendigen Reagentien, wie z.B. Antikörper, auf der inneren Oberfläche des Meßlichtleiters erfolgt nach an sich bekannten Methoden.

Das vom Meßlichtleiter emittierte Fluoreszenzlicht kann durch eine herkömmliche Meßkammer und einen Meßsensor gemessen werden. Als besonders vorteilhaft erweist sich jedoch die Verwendung einer verspiegelten Meßkammer. Besonders zweckmäßig ist es, die Meßkammer so zu gestalten, daß ein möglichst großer Anteil des emittierten Lichts auf den Meßsensor gelenkt wird. Beispielsweise hot die Meßkammer einen im wesentlichen elliptischen Querschnitt, wobei der Lichtleiter in einer Brennlinie und der Sensor auf der zweiten Brennlinie installiert ist. Die Lichtausbeute kann gewünschtenfalls durch den Einsatz eines Fokus-Adapters optimiert werden. Es ist dem Fachmann unschwer möglich, die Form der Meßkammer der Geometrie des Lichtleiters und des Sensors optimal anzupassen.

In einer weiteren bevorzugten Ausführungsform umschließt der Sensor den Lichtleiter zylinderförmig.

Das Fluoreszenzsignal wird zeitversetzt zu der Lichtanregung gemessen. Dadurch ist es möglich, die Messung des Fluoreszenzlichtes an den zeitlichen Ablauf des Fluoreszenz-/Phosphoreszenzvorganges anzupassen. Außerdem ist es möglich, bei Verwendung von mehreren Fluorophoren mit unterschiedlichem Abklingverhalten zwischen diesen zu diskriminieren. Zur zeitaufgelösten Detektion kommen entweder sogenannte Boxcar-Photomultiplier-Kombinationen oder Diodenarrays in Frage oder es wird ein sogenanntes phasenauflösendes Detektorsystem (E. Gaviola, Z. Phys., 42 [1927] 853-61; L. McGown, Anal. Chem. 56 [1984] 1400-15) verwendet. Dadurch ist zusätzlich zu der Lichtwellenlänge ein weiterer Meßparameter nutzbor. Es ist hiermit möglich, durch eine geeignete Fluorophorauswahl in einem Meßlichtleiter viele Analyte in einem Meßvorgang zu bestimmen. Ausgehend von den analytischen Daten können dann über eine Datenverarbeitungsanlage Diagnosen ausgegeben oder weiteres Vorgehen bestimmt werden.

Die übrigen Konstruktionsmerkmale wie z.B. Monochromator, optische Filter, Sensoren und so weiter entsprechen denen gängiger Fluorimeter.

Nachstehend wird die Erfindung anhand der Figuren 1 bis 3 näher erläutert:

Fig. 1 zeigt schematisch einen Längsschnitt durch eine Meßanordnung.

Fig. 2 zeigt schematisch im Längsschnitt eine Spiegelkombination zur Erzeugung einer kegelmantelförmigen Lichtführung.

Fig. 3 zeigt schematisch zwei zueinander senkrecht stehende Schnittebenen durch eine Meßkammeranordnung.

Fig. 4 zeigt schematisch den Aufbau einer Meßanordnung, wie sie bevorzugt beansprucht wird.

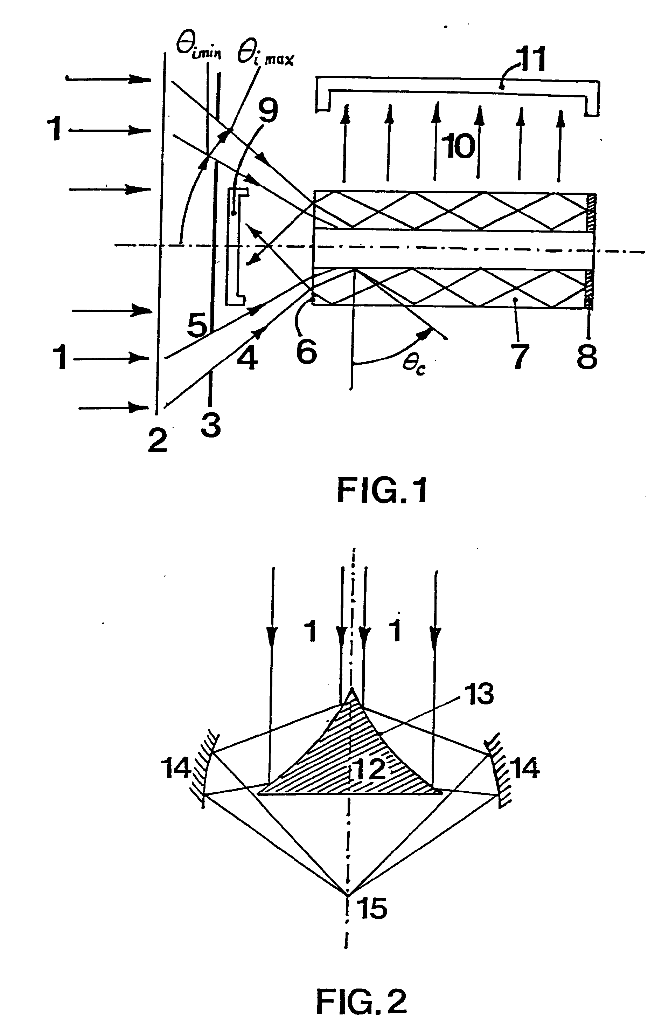

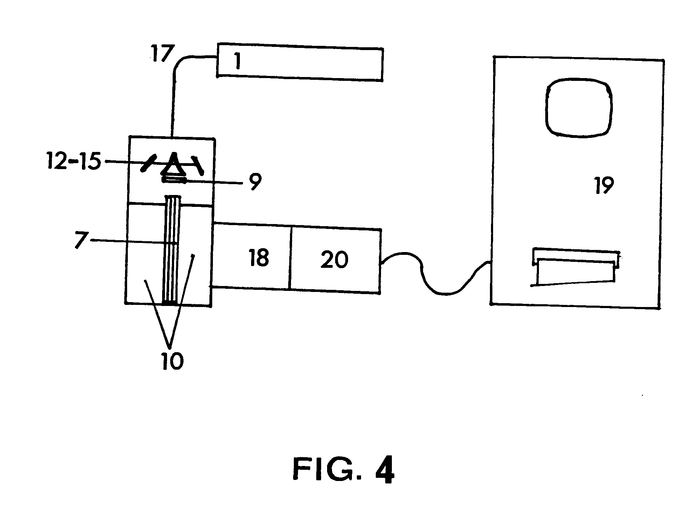

In Figur 1 trifft Licht 1 auf eine Sammellinse dargestellt durch die Linsenebene 2 durch eine Blende 3 die mit einer ringförmigen Blendenöffnung versehen ist. Dadurch entsteht eine kegelmantelförmige Lichtführung. Der Kegelmantel ist dargestellt durch den äußeren Begrenzungsstrahl 4 und inneren Begrenzungsstrahl 5. Das Licht tritt an der Stirnfläche 6 des Meßlichtleiters 7 in diesen ein. Der weitere Lichtweg durch den Meßlichtleiter 7 durch mehrfache Totalreflexion ist schematisch angedeutet. An dem der Lichteinstrahlung gegenüberliegendem Ende des Meßlichtleiters 7 kann durch eine Verspiegelung 8 das Licht den Meßlichtleiter 7 in umgekehrter Richtung durchlaufen. Nach Austritt kann dann ein Teil des Lichtes von einem Hilfssensor 9 erfaßt werden. An der Lumenoberfläche des Meßlichtleiters können fluoreszenzfähige Substanzen durch die Totalreflexion der Anregungsstrahlung Licht abstrahlen. Die emittierte Fluoreszenzstrahlung 10 kann durch den Meßsensor 11 detektiert werden. Durch eine optoelektronische Einrichtung, beispielsweise einen Boxcar 19 (Fig. 4) kann das emittierte Licht zeitabhängig zur Anregung gemessen werden. $\theta_{i\ min}$ und $\theta_{i\ max}$ sind die minimalen und Maximalen Einfallswinkel der Anregungsstrahlung während $\theta_c$ den kritischen Winkel für die Totalreflexion im Inneren des Lichtleiters bedeutet.

In Figur 2 ist dargestellt wie Licht 1 auf den Zentralspiegel 12 trifft und von dessen sphäroiden Spiegelflächen 13 über den ringförmigen Außenspiegel 14 zum Brennpunkt 15 geleitet wird. Beide Spiegel sind rotationssymmetrisch und haben eine gemeinsame Symmetrieachse.

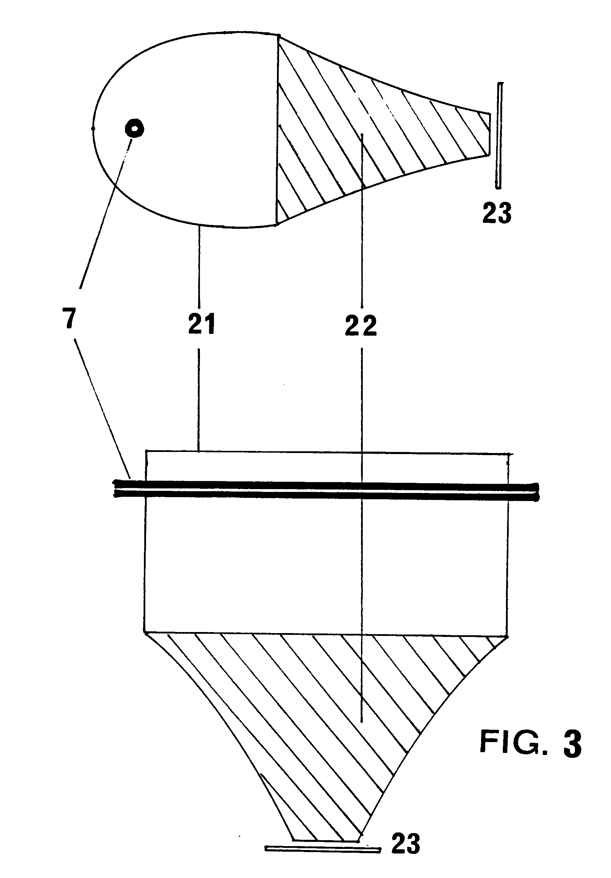

In Figur 3 ist schematisch ein Beispiel einer Meßkammeranordnung durch zwei senkrecht zueinander stehende Schnittebenen dargestellt. Der Meßlichtleiter 7 befindet sich auf der Brennlinie eines paraboloiden oder ellipsoiden verspiegelten Reflektors 21. An den Reflektor 21 ist ein Fokus-Adapter 22 angeschlossen. Dieser Fokus-Adapter 22 sammelt das aus dem Reflektor 21 austretende Licht auf die schematisch dargestellte Eingongsoptik 23 eines Monochromators oder einer Filteronordnung. Die Optimierung der Gestaltung des Reflektors 21 und des Fokus-Adapters 22 sowie ihrer gegenseitigen Anordnung erfolgt noch an sich bekannten Berechungsregeln.

In Figur 4 ist eine Meßeinrichtung schematisch dargestellt, die das Laserlicht 1 über einen Lichtleiter 17 auf die Eingangsoptik 12-15 in den Meßlichtleiter 7 bringt und über den Hilfssensor 9 Kontroll- oder Korrekturmessungen durchführt. Fluoreszenzstrahlung 10 der quantitativ zu messenden Substanzen wird über einen Monochromator (oder Filtersystem) 18 auf den Photomultiplier 20 mit angeschlossenem Boxcar 19 geleitet.

## Patentansprüche

1. Reflexionsfluorimeter mit einem zylindrischen Meßlichtleiter (7), gekennzeichnet durch einen kapillarförmigen Meßlichtleiter (7), eine kegelmantelförmige Einstrahlung (4,5) gepulsten Lichter (1) auf eine Stirnseite (6) des Meßlichtleiters (7) und eine Vorrichtung zur zeitaufgelösten Messung (19) des im wesentlichen radial aus dem Meßlichtleiter (7) austretenden Emissionslichtes (10).

2. Reflexionsfluorimeter nach Anspruch 1, gekennzeichnet durch eine Vorrichtung (18) zur wellenlängenaufgelösten Messung.

3. Vorrichtung nach einem der Ansprüche 1 und 2, dadurch gekennzeichnet, daß der Meßlichtleiter (7) an dem der Lichteinstrahlung gegenüberliegenden Ende eine Verspiegelung (8) aufweist.

4. Reflexionsfluorimeter nach einem der Ansprüche 1 und 2, gekennzeichnet durch einen Hilfssensor (9) zur Messung eines Teiles des reflektierten Lichtes und/oder des Emissionslichtes (10) zur Kompensation und Korrektur der Meßwerte.

5. Reflexionsfluorimeter nach einem der Ansprüche 1 und 2, dadurch gekennzeichnet, daß der Meßlichtleiter (7) sich auf einer Brennlinie eines Reflektors (21) befindet, der einen elliptischen und/oder paraboloiden Querschnitt hat.

6. Reflexionsfluorimeter nach Anspruch 5, dadurch gekennzeichnet, daß zusätzlich ein sich an den Reflektor (21) anschließender Fokus-Adapter (22) vorgesehen ist.

## Claims

1. Reflection fluorimeter having a cylindrical measuring light guide (7), **characterized** by a capillary measuring light guide (7), a system (4, 5) for the introduction of a pulsed light beam (1) having the shape of a conical nappe onto a face (6) of said measuring light guide (7), and by means for measuring the emitted light (10) which leaves said measuring light guide (7) substantially radially, which measurement is resolved in terms of time.

2. Reflection fluorimeter according to Claim 1, **characterized** by a means (18) for measurement resolved in terms of wavelength.

3. Reflection fluorimeter according to any of Claims 1 and 2, **characterized** in that said measuring light guide (7) is provided with a reflector coating (8) at its end opposite to the light entrance.

4. Reflection fluorimeter according to any of Claims 1 and 2, **characterized** by an auxiliary sensor (9) for measuring one part of the reflected light and/or the emitted light (10) for compensation and correction of the values measured.

5. Reflection fluorimeter according to any of Claims 1 and 2, **characterized** in that said measuring light guide (7) is provided on a focal line of a reflector (21) which presents an elliptic and/or paraboloid cross-section.

6. Reflection fluorimeter according to Claim 5, **characterized** in that additionally a focus adapter (22) is provided to join said reflector (21).

## Revendications

1. Fluorimètre à réflexion comprenant un guide de lumière de mesure cylindrique (7), **caractérisé** par un guide de lumière de mesure capillaire (7), par un système (4, 5) pour passer un rayon lumineux pulsé (1) ayant la forme d'une aire latérale de cône sur une face (6) dudit guide de lumière de mesure (7), et par des moyens pour mesurer la lumière émise (10) qui sort dudit guide de lumière de mesure (7) essentiellement radialement, à une résolution en temps.

2. Fluorimètre à réflexion selon la revendication 1, **caractérisé** par des moyens (18) pour mesurer à résolution en longueur d'onde.

3. Fluorimètre à réflexion selon une quelconque des revendications 1 et 2, **caractérisé** en ce que ledit guide de lumière de mesure (7) est prévu d'une couche réfléchissante (8) à son extrémité opposée à l'entrée de la lumière.

4. Fluorimètre à réflexion selon une quelconque des revendications 1 et 2, **caractérisé** par un détecteur auxiliaire (9) pour mesurer une partie de la lumière réfléchie et ou de la lumière émise (10) pour une compensation et correction des valeurs mesurées.

5. Fluorimètre à réflexion selon une quelconque des revendications 1 et 2, **caractérisé** en ce que ledit guide de lumière de mesure (7) est disposé sur un axe focal d'un réflecteur (21) qui présente une section elliptique et/ou paraboloïde.

6. Fluorimètre à réflexion selon la revendication 5, **caractérisé** en ce qu'en plus un adaptateur de foyer (22) est prévu et suit ledit réflecteur (21).

**FIG.1**

**FIG.2**

FIG. 3

FIG. 4